# DEMANDE DE BREVET EUROPEEN

(11) **EP 2 367 149 A1**
(43) Date de publication de la demande: **21.09.2011**
(21) Numéro de dépôt: 11157377.0
(22) Date de dépôt: 08.03.2011
(51) Int. Cl.: G06Q 10/00

(54) **Procédé de gestion d'organisation de réunions de personnes pertinentes, et dispositif associé**

(30) Priorité: 09.03.2010 FR 1051690
(71) Demandeur: Alcatel Lucent, 75007 Paris (FR)
(72) Inventeur: Castrec, Stéphane, 29228, BREST (FR); Guevel, Yann, 29228, BREST (FR)
(74) Mandataire: Mouney, Jérôme

(57) **Abrégé**

Un procédé est dédié à la gestion d'organisation de réunions de personnes disposant d'un équipement de communication (E1-E5) accessible via au moins un réseau de communication (RC). Ce procédé consiste, lorsque l'une de ces personnes veut organiser une réunion définie par au moins un mot de définition, à chercher dans au moins une base de données (BD) accessible via un réseau de communication (RC) et stockant des noms de personnes, ayant des informations de gestion accessibles, en correspondance de mot(s) décrivant une compétence ou un centre d'intérêt, si il existe au moins une personne ayant un nom stocké en correspondance d'au moins un mot présentant une relation avec le mot de définition de la réunion, afin de fournir une liste de nom(s) de personne(s) pertinente(s) susceptible(s) de pouvoir participer à la réunion.

## Description

L'invention concerne l'organisation automatisée de réunions.

Comme le sait l'homme de l'art, plusieurs solutions logicielles ont été proposées pour permettre l'organisation automatisée de réunions. Ainsi, il a été proposé d'afficher sur un écran les emplois du temps électroniques respectifs de personnes préalablement désignées (par saisie manuelle ou par sélection dans une liste) que l'on souhaiterait voir assister à une réunion, de manière à permettre à une personne de déterminer une date et un lieu de réunion entre ces personnes désignées. Il a également été proposé de déterminer une date et un lieu optimal, pour organiser une réunion entre des personnes préalablement désignées, par analyse automatisée des emplois du temps électroniques de ces personnes et d'informations définissant les dates et horaires d'occupation de lieux de réunion, ainsi qu'éventuellement d'informations définissant les équipements de communication et/ou les équipements audiovisuels qui sont utilisables dans ces lieux de réunion.

Ces solutions, et en particulier la dernière, s'avèrent très utiles. Cependant, elles nécessitent la connaissance des compétences et/ou centres d'intérêt des personnes que l'on veut réunir et la désignation préalable de ces personnes, ce qui n'est pas toujours possible et donc peut empêcher l'organisation de réunions, ou bien conduire à l'organisation de réunions contenant des personnes qui n'auraient pas dû être conviées.

L'invention a donc pour but de proposer une solution alternative destinée à remédier au moins partiellement à l'inconvénient précité.

Elle propose à cet effet un procédé, dédié à la gestion d'organisation de réunions de personnes qui disposent d'un équipement de communication accessible via au moins un réseau de communication, et consistant, lorsque l'une de ces personnes veut organiser une réunion définie par au moins un mot de définition, à chercher dans au moins une base de données accessible via un réseau de communication et stockant des noms de personnes, ayant des informations de gestion accessibles, en correspondance de mot(s) décrivant une compétence ou un centre d'intérêt, si il existe au moins une personne ayant un nom stocké en correspondance d'au moins un mot présentant une relation avec un mot de définition de la réunion, afin de fournir une liste de nom(s) de personne(s) pertinente(s) susceptible(s) de pouvoir participer à la réunion.

Le procédé selon l'invention peut comporter d'autres caractéristiques qui peuvent être prises séparément ou en combinaison, et notamment :
- après avoir déterminé une liste de nom(s) de personne(s) pertinente(s), on détermine dans cette liste chaque nom associé à des informations de gestion satisfaisant à au moins un critère de réunion choisi, afin de fournir une liste affinée;
   ➢ chaque critère de réunion peut être choisi parmi (au moins) une date et un horaire de réunion, le niveau hiérarchique de la personne au sein de son entreprise, l'appartenance à un programme de recherche, l'appartenance à une organisation interne, l'appartenance à une entreprise, le niveau de notoriété, le lieu de résidence et le lieu de travail;
- après avoir déterminé une liste de nom(s) de personne(s) pertinente(s), on détermine une date de réunion qui est la mieux appropriée en fonction des disponibilités connues et accessibles de chaque personne de cette liste;
- après avoir déterminé une liste de nom(s) de personne(s) pertinente(s), éventuellement affinée, on peut également déterminer un lieu où peut se tenir la réunion en fonction d'au moins un critère de lieu choisi;
   ➢ chaque critère de lieu peut être choisi parmi (au moins) le nombre de personnes qui sont susceptibles de pouvoir participer à la réunion, les équipements de communication utilisables (dans le lieu de réunion) et les équipements audiovisuels utilisables (dans le lieu de réunion);
- la réunion peut être définie par au moins un mot contenu dans le sujet de la réunion et/ou au moins un mot-clé auxiliaire;
- on peut proposer une liste de mots-clés à la personne qui veut organiser la réunion afin qu'elle définisse cette réunion avec au moins un mot-clé de cette liste;
- on peut chercher si il existe au moins une personne ayant un nom qui est stocké au moins un nombre de fois supérieur ou égal à un seuil choisi en correspondance d'au moins un mot présentant une relation avec un mot de définition de la réunion;
- après avoir déterminé une liste de nom(s) de personne(s) pertinente(s), éventuellement affinée, on peut permettre à la personne qui veut organiser la réunion de supprimer et/ou de rajouter au moins un nom de la liste de noms de personnes déterminée;
- après avoir déterminé une liste de nom(s) de personne(s) pertinente(s), éventuellement affinée, on peut adresser à un équipement de communication désigné de chaque personne de la liste déterminée au moins une invitation à participer à la réunion.

L'invention propose également un dispositif de traitement, destiné à équiper un équipement de communication d'une personne (propre à être couplé à un réseau de communication), et agencé de manière à mettre en oeuvre un procédé du type de celui présenté ci-avant.

L'invention propose également un programme informatique, destiné à être utilisé par un équipement de communication d'une personne, propre à être couplé à un réseau de communication, et constituant un dispositif de traitement du type de celui présenté ci-avant.

D'autres caractéristiques et avantages de l'invention apparaîtront à l'examen de la description détaillée ci-après, et des dessins annexés, sur lesquels :
- la figure 1 illustre de façon très schématique et fonctionnelle un exemple de réseau de communication auquel sont connectés des équipements de communication équipés chacun d'un dispositif de traitement selon l'invention, et
- la figure 2 illustre de façon très schématique et fonctionnelle un exemple de fenêtre applicative permettant à une personne de définir une réunion qu'elle veut organiser en fonction de plusieurs critères de réunion et critères de lieu.

Les dessins annexés pourront non seulement servir à compléter l'invention, mais aussi contribuer à sa définition, le cas échéant.

L'invention a notamment pour but d'offrir un procédé, et un dispositif de traitement (D) associé, permettant de gérer l'organisation de réunions de personnes qui disposent d'au moins un équipement de communication (Ej) accessible via au moins un réseau de communication (RC).

Dans ce qui suit, on considère à titre d'exemple non limitatif que les personnes sont équipées d'équipements de communication (Ej) de type filaire, comme par exemple des ordinateurs, pouvant se connecter à un réseau de communication (RC) de type filaire (par exemple Ethernet). Mais, l'invention n'est limitée ni à ce type de réseau de communication, ni à ce type d'équipement de communication. Elle concerne en effet tout type de réseau de communication filaire ou non filaire, et donc tout type d'équipement de communication pouvant se connecter à un réseau de communication filaire ou non filaire. Par conséquent, le réseau de communication (RC) pourra être, par exemple, un réseau mobile (ou cellulaire), et les équipements de communication (Ej) pourront être, par exemple, des ordinateurs de bureau, des ordinateurs portables, des téléphones fixes ou mobiles, ou des assistants personnels numériques communicants (ou «PDAs »).

Par ailleurs, on considère dans ce qui suit, à titre d'exemple non limitatif, que les personnes font partie d'une même entreprise (ou de filiales d'un groupe d'entreprises) et que le réseau de communication est un réseau privé d'entreprise (par exemple de type intranet). Mais, l'invention n'est pas limitée à ce type d'application. Elle concerne en effet tout type de personne, appartenant ou non à une même entreprise, toutes ces personnes étant connectées à au moins une base de données, éventuellement centralisée (par exemple un réseau social).

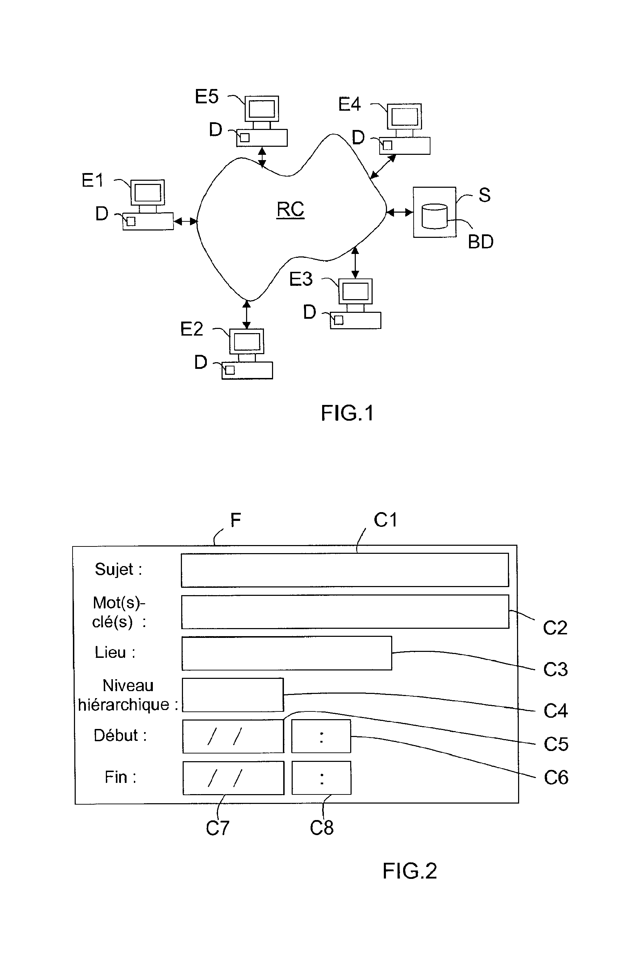

On a schématiquement représenté sur la figure 1 un exemple de réseau de communication RC (ici de type réseau d'entreprise privé) auquel sont connectés des équipements (de communication) Ej (ici des ordinateurs fixes ou portables), appartenant à des personnes qui font partie d'une même entreprise. On notera que l'invention concerne également les équipements (de communication) Ej de type nomade qui peuvent se connecter au réseau RC via au moins un autre réseau de communication (éventuellement via l'Internet), du fait que les personnes qui les utilisent disposent de droits d'accès audit réseau RC.

Dans l'exemple non limitatif illustré sur la figure 1, chaque équipement (de communication) Ej (ici j = 1 à 5) est couplé à un dispositif de traitement D chargé de mettre en oeuvre un procédé selon l'invention. On entend ici par "couplé" le fait de comporter un dispositif de traitement D ou bien d'être connecté à un tel dispositif de traitement D. Par conséquent, un dispositif de traitement D, selon l'invention, peut être réalisé sous la forme de modules logiciels (ou programme informatique), ou bien de circuits électroniques, ou encore d'une combinaison de circuits électroniques et de modules logiciels.

L'invention propose de mettre en oeuvre, au sein d'un équipement Ej (grâce au dispositif de traitement D associé), un procédé qui est destiné à gérer l'organisation de réunions.

Le procédé selon l'invention est mis en oeuvre (par un dispositif de traitement D) chaque fois qu'une personne (équipée d'un équipement Ej couplé à un dispositif de traitement D) veut organiser une réunion qui est définie par au moins un mot dit "de définition".

Lorsqu'une personne, ci-après appelée organisatrice, veut organiser une réunion, elle charge dans son équipement Ej l'application qui est contrôlée par le dispositif D associé. Ce chargement provoque l'affichage sur l'écran de l'équipement Ej d'une fenêtre de saisie/sélection F, par exemple du type de celle qui est illustrée non limitativement sur la figure 2.

On notera qu'une réunion peut être définie par la personne organisatrice par au moins un mot qui est contenu dans son sujet et/ou par au moins un mot-clé (ou "tag") auxiliaire. Pour ce faire, la personne organisatrice peut par exemple fournir elle-même un sujet ou au moins un mot-clé, par saisie manuelle dans un champ dédié C1 ou C2 de la fenêtre applicative F. Mais, en variante ou en complément, l'application (D) peut mettre à sa disposition une liste de mots-clés dans laquelle la personne organisatrice peut procéder à une sélection d'un ou plusieurs mots-clés pour renseigner le champ C1 dédié au sujet de la réunion et/ou le champ C2 dédié aux mots-clés auxiliaires. Par exemple (et non limitativement), si les champs C1 et C2 ont été renseignés, ce sont les mots-clés (auxiliaires) contenus dans le champ C2 renseigné qui constituent la définition de la réunion, et si seul le champ C1 a été renseigné, ce sont les mots (éventuellement clés) qu'il contient qui constituent la définition de la réunion.

On appelle ici "mot de définition" un mot ou mot-clé qui fait partie d'une définition de réunion. On notera que lorsque seul le champ C1 a été renseigné au moyen d'une phrase ou expression, on peut envisager que le dispositif D procède à une analyse (par exemple sémantique) de cette phrase (ou expression) afin de déterminer au moins un mot de définition qui la représente et donc la caractérise.

Le procédé selon l'invention comprend au moins une étape principale qui débute lorsqu'un dispositif D reçoit une définition de réunion de la personne organisatrice qui utilise l'équipement Ej associé. Cette étape principale consiste à chercher dans au moins une base de données BD, qui est accessible via le réseau de communication RC et qui stocke des noms de personnes, ayant des informations de gestion accessibles, en correspondance de mot(s) décrivant une compétence (ou "skill") ou un centre d'intérêt, si il existe au moins une personne qui a un nom stocké en correspondance d'au moins un mot présentant une relation avec un mot de définition de la réunion, afin de fournir une liste de nom(s) de personne(s) pertinente(s) susceptible(s) de pouvoir participer à la réunion.

Les mots qui sont stockés en correspondance des noms sont par exemple des mots-clés qui sont extraits de, ou attribués à des documents privés ou publics, comme par exemple des notes d'analyse ou de définition de programmes ou missions de recherche, des publications, des articles, des rapports d'activité et des études. Selon un autre exemple, ces mots clés peuvent aussi être extraits d'un réseau social (public ou privé). Ces extraction et attribution, connues par ailleurs, ne font pas partie de l'invention, laquelle ne fait qu'utiliser leurs résultats (mots-clés extraits et attribués).

On entend ici par "informations de gestion" toutes les informations, plus ou moins confidentielles, qui sont utiles à la gestion d'une personne avec son accord. Ainsi, il peut s'agir, notamment, de son adresse de domicile, de son adresse de travail et de son emploi du temps électronique. On notera que ces informations de gestion peuvent être également stockées dans la base de données BD. Mais, cela n'est pas obligatoire. En effet, elles peuvent être stockées dans une autre base de données qui peut faire partie du serveur S ou bien d'un autre serveur, éventuellement externe au réseau RC (mais accessible via ce dernier (RC)).

Par ailleurs, on entend ici par "relation" le fait d'être identique ou d'avoir une définition équivalente (synonymie) ou encore d'avoir un lien relationnel (par exemple par connexité).

On notera que la base de données BD peut par exemple appartenir à un réseau social, qui est ici privé (du fait qu'il appartient à une entreprise), mais qui pourrait être public.

Dans l'exemple non limitatif illustré sur la figure 1, la base de données BD est stockée dans un serveur S privé qui est connecté au réseau RC et accessible aux équipements Ej, par exemple via une interface de programmation d'application (ou API pour "Application Programming Interface") (non représentée). Mais, on pourrait envisager que la base de données BD soit externe au réseau privé d'entreprise, et qu'il soit accessible via son réseau RC (et éventuellement via l'Internet (par exemple)). Par ailleurs, on peut également envisager que les mots qui décrivent les compétences (ou skills) et/ou centres d'intérêt des personnes soient stockés dans plusieurs bases de données différentes, co-localisées ou non (par exemple accessibles auprès de plusieurs réseaux privés d'entreprises et/ou réseaux de télécommunications et/ou l'Internet).

Par exemple, une telle base de données BD stocke non seulement des mots(-clés) en correspondance de noms, mais également le nombre de fois ou chaque mot(-clé) a été associé à un nom. Ces mots(-clés) peuvent éventuellement faire partie du profil de la personne considérée. On notera que de tels profils peuvent être éventuellement affinés au cours du temps (éventuellement par auto-apprentissage), de manière à toujours mieux définir et/ou mettre à jour les compétences et/ou centres d'intérêt des personnes. Il est rappelé que le processus de stockage et de mise à jour des mots-clés ne fait pas partie de la présente invention.

On notera également que pendant l'étape principale on peut chercher chaque personne dont le nom est stocké en correspondance d'au moins un mot(-clé) qui lui a été associé un nombre de fois supérieur ou égal à un seuil choisi (par exemple par la personne organisatrice). On comprendra que ce nombre d'associations d'un mot(-clé) est en quelque sorte représentatif du niveau d'expertise ou de compétence de la personne associée dans le domaine défini par ledit mot(-clé).

Dans ce cas, on ne retient que les personnes dont le nom est associé à au moins un mot(-clé) un nombre de fois qui est supérieur au seuil choisi. On notera que le seuil peut éventuellement varier d'un mot(-clé) à l'autre.

Tout type de moyen de stockage connu de l'homme de l'art peut être envisagé pour stocker la base de données BD, y compris un moyen de stockage purement logiciel.

Une fois l'étape principale terminée, et donc une fois qu'une liste de nom(s) de personne(s) pertinente(s), a été déterminée, on peut déterminer dans cette liste chaque nom qui est associé à des informations de gestion qui satisfont à au moins un critère de réunion choisi, afin de fournir une liste affinée.

Chaque critère de réunion peut être choisi par la personne organisatrice, par exemple en renseignant, par saisie ou par sélection dans une liste proposée, un champ qui lui est associé (et éventuellement dédié) dans la fenêtre applicative F.

Par exemple, chaque critère de réunion peut être choisi parmi au moins la date et l'horaire de réunion, le niveau hiérarchique d'une personne au sein de son entreprise, l'appartenance d'une personne à un programme de recherche, l'appartenance d'une personne à une organisation interne, l'appartenance d'une personne à une entreprise, le niveau de notoriété d'une personne, le lieu de résidence d'une personne et le lieu de travail d'une personne.

Dans l'exemple non limitatif illustré sur la figure 2, la fenêtre applicative F comprend un champ C3 dédié à la fourniture d'un lieu (ville ou région ou encore pays) de réunion, un champ C4 dédié à la fourniture d'un niveau hiérarchique au sein d'une entreprise ou d'une organisation, un champ C5 dédié à la fourniture d'une date de début de réunion, un champ C6 dédié à la fourniture d'un horaire de début de réunion, un champ C7 dédié à la fourniture d'une date de fin de réunion, et un champ C8 dédié à la fourniture d'un horaire de fin de réunion.

A titre d'exemple illustratif et non limitatif, la personne organisatrice peut rechercher les personnes qui sont compétentes (et donc pertinentes) dans le domaine java (mot-clé auxiliaire de définition de réunion), qui travaillent dans la région de Brest, qui sont placées au niveau hiérarchique n-1 par rapport à elle (c'est-à-dire au niveau immédiatement inférieur au sien), et qui sont a priori disponibles et présentes dans la région considérée le 20 février 2010 entre 9H00 et 11H00.

On notera que l'on peut éventuellement envisager d'appliquer les critères de réunion de façon séquentielle, c'est-à-dire les uns après les autres, en fournissant à la personne organisatrice (par affichage) après chaque application d'un critère de réunion complémentaire une nouvelle proposition de liste de noms affinée. On comprendra en effet, que plus le nombre de critères de réunion utilisé est élevé, plus le nombre de noms sera faible sur la liste de noms affinée finale. Par conséquent, il peut être avantageux de permettre à la personne organisatrice de décider d'arrêter le traitement en cours de séquence, avant que le nombre de noms de personnes susceptibles de pouvoir participer à la réunion en cours d'organisation ne devienne trop faible. Mais, dans une variante, la recherche de noms peut se faire en une seule passe utilisant tous les critères de réunion en même temps.

On notera également qu'en variante, une fois l'étape principale terminée, et donc une fois qu'une liste de nom(s) de personne(s) pertinente(s), a été déterminée, on peut déterminer une date de réunion qui est la mieux appropriée en fonction des disponibilités connues et accessibles de chaque personne de cette liste. Pour ce faire, on peut, par exemple, utiliser les capacités classiques offertes par les agendas électroniques pour déterminer la date et l'heure de réunion qui permettent d'associer un maximum des participants pertinents déterminés. Bien entendu, dans ce cas on peut également appliquer un ou plusieurs critères de réunion afin de déterminer une liste affinée.

Le procédé selon l'invention peut également (et éventuellement) permettre de déterminer automatiquement un lieu où peut se tenir la réunion en cours d'organisation en fonction d'au moins un critère de lieu choisi.

Par exemple, chaque critère de lieu peut être choisi parmi au moins le nombre de personnes qui sont susceptibles de pouvoir participer à la réunion (ce nombre est fixé par le nombre de noms contenus dans la liste déterminée, éventuellement affinée), les équipements de communication qui sont utilisables dans le lieu déterminé (par exemple ligne(s) de communication à très haut débit pour la vidéoconférence, accès aux conférences téléphoniques, accès à l'Internet à haut débit, ligne(s) de communication sécurisée(s)), et les équipements audiovisuels utilisables (par exemple vidéo-projecteur(s), ordinateur(s), écran(s) de télévision).

Le lieu déterminé peut par exemple être soumis à l'approbation de la personne organisatrice avant d'être utilisé pour effectuer une réservation en temps réel. Par exemple en cas de refus d'utiliser le lieu proposé, le dispositif D peut en rechercher un autre afin de faire une nouvelle proposition, éventuellement en fonction d'instructions complémentaires fournies par la personne organisatrice.

On notera également qu'une fois l'étape principale terminée, et donc une fois qu'une liste de nom(s) de personne(s) pertinente(s), éventuellement affinée, a été déterminée, on peut éventuellement permettre à la personne organisatrice de supprimer au moins un nom de la liste de noms de personnes déterminée, éventuellement affinée, et/ou de rajouter à cette liste au moins une personne dont elle est assurée de la disponibilité pour la réunion en cours d'organisation.

Le procédé selon l'invention peut également (et éventuellement) permettre, après détermination d'une liste, éventuellement affinée, d'adresser à un équipement Ej désigné de chaque personne de la liste finale déterminée au moins une invitation à participer à la réunion en cours d'organisation. Cette invitation peut par exemple être classiquement consultable au moyen d'un équipement de communication (fixe ou mobile) équipé d'une application de communication unifiée, comme par exemple My Instant Communicator® de la société Alcatel-Lucent ou Notes® ou Sametime® de la société IBM. On comprendra que l'on peut envisager de coupler un dispositif D selon l'invention à un agenda électronique ou à un outil de communication unifiée comportant un agenda électronique.

Mais, il est également possible d'adresser à un équipement Ej désigné de chaque personne de la liste finale déterminée au moins une invitation à participer à la réunion en cours d'organisation et des informations définissant cette réunion (lieu, sujet, heure et date de réunion, ainsi qu'éventuellement les noms des autres participants). On comprendra que dans ce cas, on doit disposer de l'identifiant de communication de l'équipement Ej (couplé à un dispositif D) de chaque personne susceptible de participer à une réunion, afin de pouvoir adresser à son dispositif D l'invitation et les informations précitées pour qu'il les affiche sur l'écran dudit équipement Ej au moyen d'une fenêtre applicative.

On comprendra que grâce à l'invention une personne peut désormais organiser une réunion dans laquelle ne seront présents (sauf ajout délibéré) que des personnes pertinentes du fait qu'elles possèdent de véritables connaissances dans le(s) domaine(s) concerné(s) par cette réunion, sans avoir à fournir une liste de noms potentiels. Cela est notamment avantageux lorsque la personne organisatrice ne connaît pas les compétences et/ou les centres d'intérêt d'autres personnes, mais également lorsque la personne organisatrice ne veut pas perdre de temps à constituer une liste de noms potentiels qui risque fort de ne pas être exhaustive. En outre, cela permet d'augmenter sensiblement l'intérêt d'une réunion.

## Revendications

1. Procédé de gestion d'organisation de réunions de personnes disposant d'un équipement de communication (Ej) accessible via au moins un réseau de communication (RC), **caractérisé en ce qu'**il consiste, lorsque l'une desdites personnes veut organiser une réunion définie par au moins un mot de définition, à chercher dans au moins une base de données (BD) accessible via un réseau de communication (RC) et stockant des noms de personnes, ayant des informations de gestion accessibles, en correspondance de mot(s) décrivant une compétence ou un centre d'intérêt, si il existe au moins une personne ayant un nom stocké en correspondance d'au moins un mot présentant une relation avec ledit mot de définition de la réunion, afin de fournir une liste de nom(s) de personne(s) pertinente(s) susceptible(s) de pouvoir participer à ladite réunion.

2. Procédé selon la revendication 1, **caractérisé en ce qu'**après avoir déterminé une liste de nom(s) de personne(s) pertinente(s), on détermine dans cette liste chaque nom associé à des informations de gestion satisfaisant à au moins un critère de réunion choisi, afin de fournir une liste affinée.

3. Procédé selon la revendication 2, **caractérisé en ce que** chaque critère de réunion est choisi dans un groupe comprenant au moins une date et un horaire de réunion, un niveau hiérarchique d'une personne au sein de son entreprise, une appartenance à un programme de recherche, une appartenance à une organisation interne, une appartenance à une entreprise, un niveau de notoriété, un lieu de résidence et un lieu de travail.

4. Procédé selon l'une des revendications 1 à 3, **caractérisé en ce qu'**après avoir déterminé une liste de nom(s) de personne(s) pertinente(s), on détermine une date de réunion qui est la mieux appropriée en fonction des disponibilités connues et accessibles de chaque personne de cette liste.

5. Procédé selon l'une des revendications 1 à 4, **caractérisé en ce qu'**après avoir déterminé une liste de nom(s) de personne(s) pertinente(s), éventuellement affinée, on détermine également un lieu où peut se tenir ladite réunion en fonction d'au moins un critère de lieu choisi.

6. Procédé selon la revendication 5, **caractérisé en ce que** chaque critère de lieu est choisi dans un groupe comprenant au moins le nombre de personnes susceptibles de pouvoir participer à ladite réunion, les équipements de communication utilisables et les équipements audiovisuels utilisables.

7. Procédé selon l'une des revendications 1 à 6, **caractérisé en ce que** ladite réunion est définie par au moins un mot contenu dans un sujet de ladite réunion et/ou au moins un mot-clé auxiliaire.

8. Procédé selon l'une des revendications 1 à 7, **caractérisé en ce que** l'on propose une liste de mots-clés à la personne qui veut organiser la réunion afin qu'elle définisse ladite réunion avec au moins un mot-clé de ladite liste.

9. Procédé selon l'une des revendications 1 à 8, **caractérisé en ce que** l'on cherche si il existe au moins une personne ayant un nom stocké au moins un nombre de fois supérieur ou égal à un seuil choisi en correspondance d'au moins un mot présentant une relation avec un mot de définition définissant ladite réunion.

10. Procédé selon l'une des revendications 1 à 9, **caractérisé en ce qu'**après avoir déterminé une liste de nom(s) de personne(s) pertinente(s), éventuellement affinée, on permet à la personne qui veut organiser la réunion de supprimer et/ou de rajouter au moins un nom de ladite liste de noms de personnes déterminée.

11. Procédé selon l'une des revendications 1 à 10, **caractérisé en ce qu'**après avoir déterminé une liste de nom(s) de personne(s) pertinente(s), éventuellement affinée, on adresse à un équipement de communication (Ej) désigné de chaque personne de ladite liste déterminée au moins une invitation à participer à ladite réunion.

12. Dispositif de traitement (D) pour un équipement de communication (Ej) d'une personne, propre à être couplé à un réseau de communication (RC), **caractérisé en ce qu'**il est agencé de manière à mettre en oeuvre un procédé de gestion selon l'une des revendications 1 à 11.

13. Programme informatique destiné à être utilisé par un équipement de communication (Ej) d'une personne, propre à être couplé à un réseau de communication (RC), **caractérisé en ce qu'**il constitue un dispositif de traitement (D) selon la revendication 12.
